# EUROPEAN PATENT APPLICATION

(11) **EP 4 752 698 A1**
(43) Date of publication of application: **03.06.2026**
(21) Application number: 24860228.6
(22) Date of filing: 05.08.2024
(51) Int. Cl.: G06F 3/0484, G06F 3/041, G06F 3/16, G06F 1/16

(54) **ELECTRONIC DEVICE COMPRISING FLEXIBLE DISPLAY, AND CONTROL METHOD THEREFOR**

(30) Priority: 28.08.2023 KR 20230112725; 23.11.2023 KR 20230164905
(71) Applicant: Samsung Electronics Co., Ltd., Suwon-si, Gyeonggi-do 16677 (KR)
(72) Inventor: BANG, Hyosang, Suwon-si Gyeonggi-do 16677 (KR); JEONG, Jongil, Suwon-si Gyeonggi-do 16677 (KR); PARK, Jihea, Suwon-si Gyeonggi-do 16677 (KR)
(74) Representative: Nederlandsch Octrooibureau
(86) International application number: PCT/KR2024/011489
(87) International publication number: WO 2025/048307

(57) **Abstract**

An electronic device is disclosed. The electronic device of the present disclosure comprises: a multi-foldable housing including a first housing, a second housing rotatably connected to one end of the first housing, and a third housing rotatably connected to the other end of the first housing; a first hinge for rotatably connecting the first housing and the second housing; a second hinge for rotatably connecting the first housing and the third housing; a flexible display exposed through a first display area of the first housing, a second display area of the second housing, and a third display area of the third housing; a cover display arranged in a fourth area that is opposite to the second display of the second housing; a first sensor, a second sensor, a third sensor, a memory, and a processor operatively connected to the flexible display, the cover display, the first sensor, the second sensor, the third sensor, and the memory; wherein the memory can include instructions that, when executed by the processor, cause the electronic device to identify a folding state of the electronic device on the basis of the sensing value of the first sensor, the sensing value of the second sensor, and the sensing value of the third sensor, and, on the basis of identifying that the folding state is the first folding state, display, on the cover display, a screen related to an application being executed.

## Description

### [Technical Field]

Embodiments of the disclosure relate to an electronic device including a flexible display and a method for controlling the same.

### [Background Art]

More and more services and additional functions are being provided through electronic devices, e.g., smartphones, or other portable electronic devices. To meet the needs of various users and raise use efficiency of electronic devices, communication service carriers or device manufacturers are jumping into competitions to develop electronic devices with differentiated and diversified functionalities. Accordingly, various functions that are provided through electronic devices are evolving more and more.

Recently, various types of electronic devices are being developed that provide a wider screen through multi-display. For example, an electronic device has multiple displays and provides a wide screen through multi-display.

Electronic devices may have a new form factor, such as multi-display (e.g., dual-display) devices (e.g., foldable devices). A foldable device has a folding (or bending) display (e.g., a foldable display or a flexible display) to be used in a folded or unfolded state. Further, the multi-display implementation leads to increased demand for development of a user interface (UI) corresponding to the multi-display and its operation.

The above-described information may be provided as related art for the purpose of helping understanding of the disclosure. No claim or determination is made as to whether any of the foregoing is applicable as background art in relation to the disclosure.

### [Detailed Description of the Invention]

### [Technical Solution]

According to an embodiment, an electronic device may include a multi-foldable housing including a first housing, a second housing rotatably connected to one end of the first housing, and a third housing rotatably connected to another end of the first housing, a first hinge rotatably connecting the first housing and the second housing, a second hinge rotatably connecting the first housing and the third housing, a flexible display exposed through a first display area of the first housing, a second display area of the second housing, and a third display area of a third housing, a cover display disposed in a fourth area opposite the second display area of the second housing, a first sensor, a second sensor, a third sensor, memory, and a processor operatively connected to the flexible display, the cover display, the first sensor, the second sensor, the third sensor, and the memory.

According to an embodiment, the memory may store instructions that, when executed by the processor, cause the electronic device to identify a folding state of the electronic device based on a sensing value of the first sensor, a sensing value of the second sensor, and a sensing value of the third sensor.

According to an embodiment, the memory may store instructions that, when executed by the processor, cause the electronic device to, based on identifying that the folding state is a first folding state, display a screen related to an application being executed on the cover display.

According to an embodiment, a control method of an electronic device may include an operation of identifying a folding state of the electronic device based on a sensing value of a first sensor of the electronic device, a sensing value of a second sensor of the electronic device, and a sensing value of a third sensor of the electronic device.

According to an embodiment, the control method of the electronic device may include an operation of, based on identifying that the folding state is a first folding state, displaying a screen related to an application being executed on a cover display.

According to an embodiment, in a non-transitory computer-readable recording medium storing one or more programs, the one or more programs may include instructions for an electronic device to identify a folding state of the electronic device based on a sensing value of a first sensor of the electronic device, a sensing value of a second sensor of the electronic device, and a sensing value of a third sensor of the electronic device.

According to an embodiment, the one or more programs may enable the electronic device to, based on identifying that the folding state is a first folding state, display a screen related to an application being executed on the cover display.

### [Brief Description of Drawings]

FIG. 1 is a block diagram illustrating an electronic device in a network environment according to an embodiment.
FIG. 2A is a perspective view illustrating an unfolded state of an electronic device according to an embodiment.
FIG. 2B is a perspective view illustrating an unfolded state of an electronic device according to an embodiment.
FIG. 3 is a perspective view illustrating a folded state of an electronic device according to an embodiment.
FIG. 4A is a view illustrating a partially folded state of an electronic device according to an embodiment.

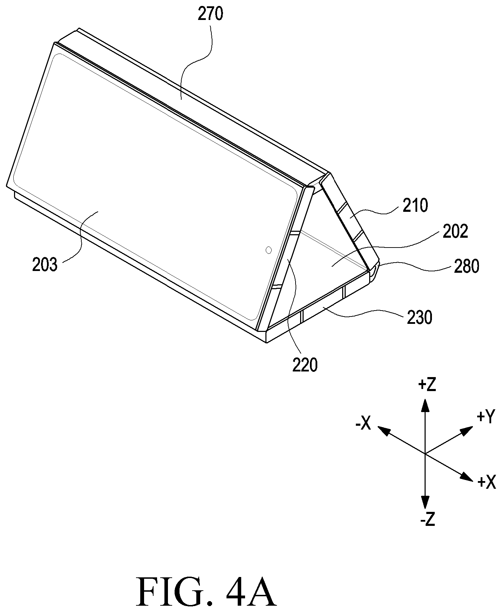

FIG. 4A is a view illustrating a partially folded state of an electronic device according to an embodiment.

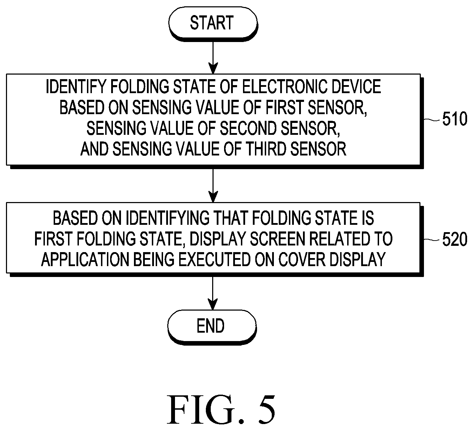

FIG. 5 is a view illustrating an operation of an electronic device according to a folding state of the electronic device according to an embodiment.

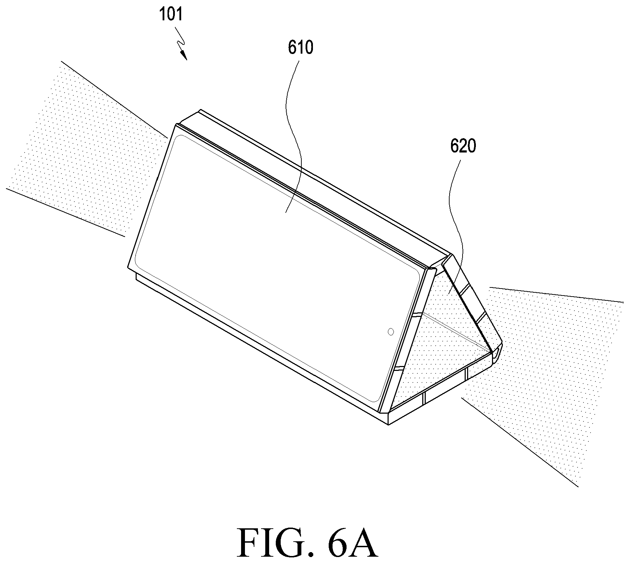

FIG. 6A is a view illustrating a color light display operation in a first folding state of an electronic device according to an embodiment.

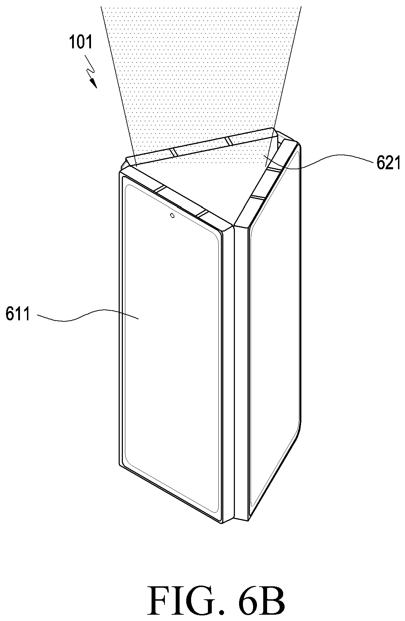

FIG. 6B is a view illustrating a color light display operation in a second folding state of an electronic device according to an embodiment.

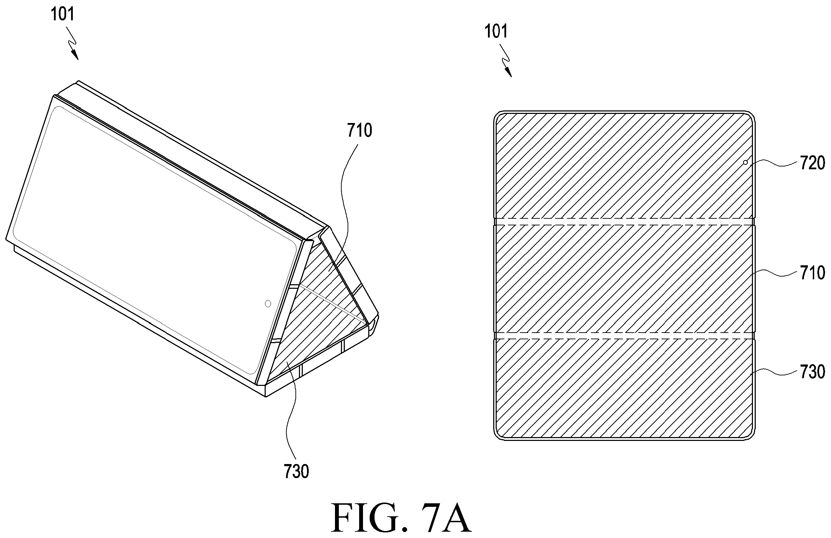

FIG. 7A is a view illustrating an example of color light displayed by an electronic device according to an embodiment.

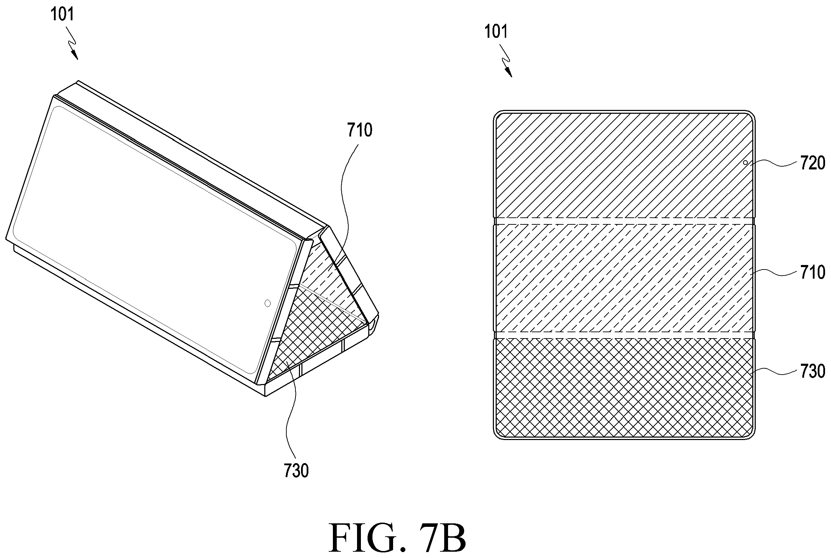

FIG. 7B is a view illustrating an example of color light displayed by an electronic device according to an embodiment.

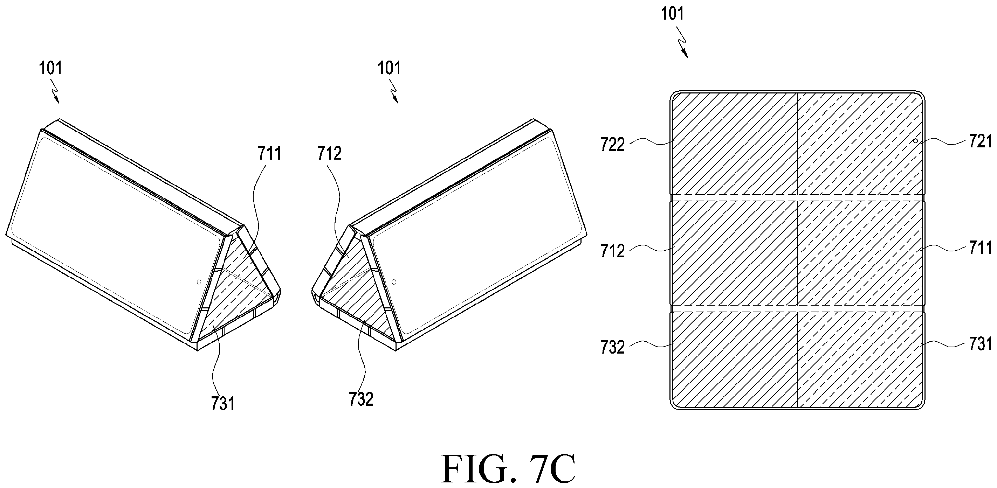

FIG. 7C is a view illustrating an example of color light displayed by an electronic device according to an embodiment.

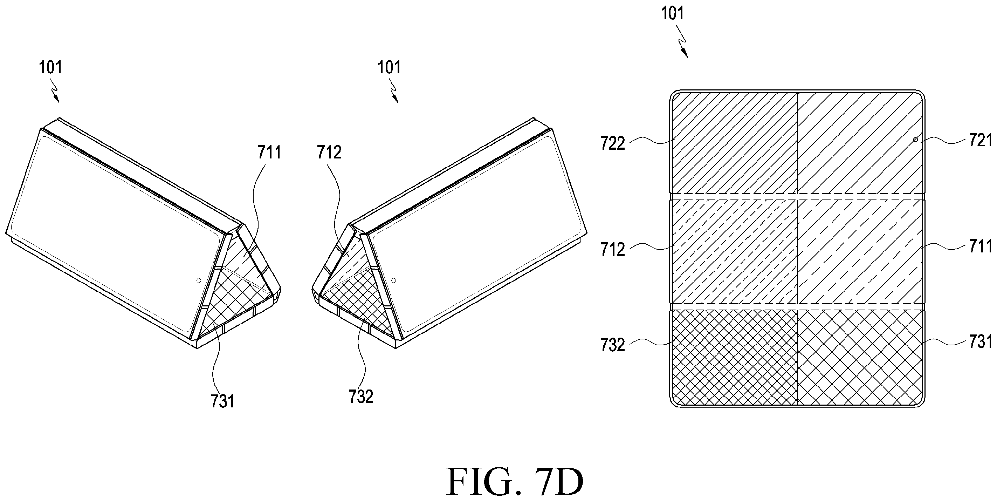

FIG. 7D is a view illustrating an example of color light displayed by an electronic device according to an embodiment.

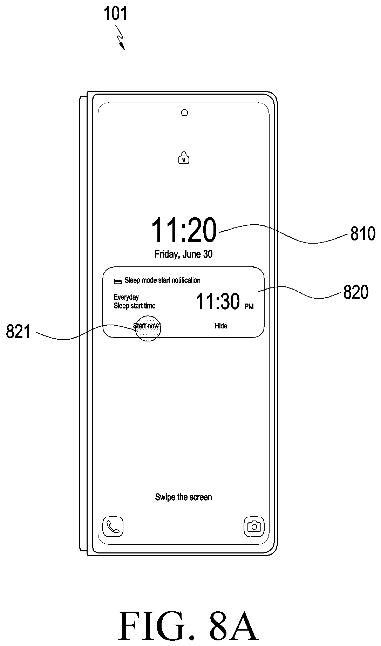

FIG. 8A is a view illustrating a sleep mode entry operation of an electronic device according to an embodiment.

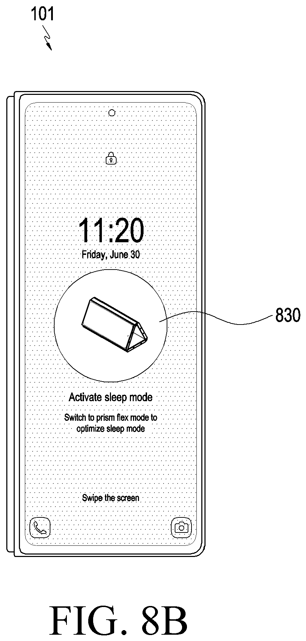

FIG. 8B is a view illustrating a sleep mode entry operation of an electronic device according to an embodiment.

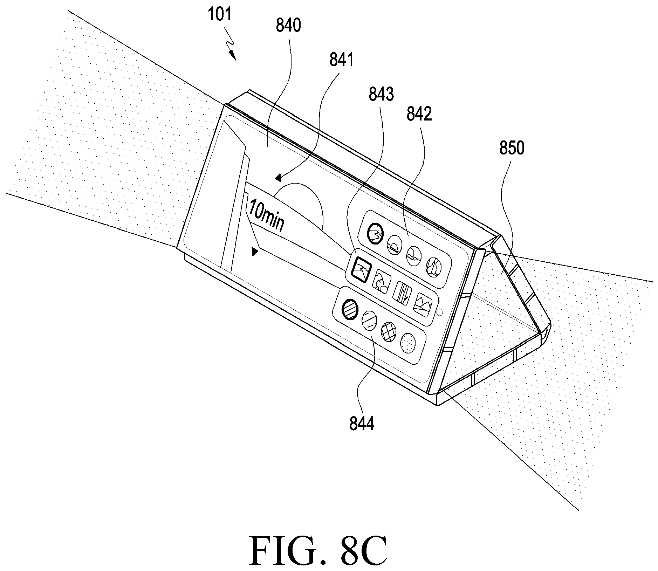

FIG. 8C is a view illustrating an operation according to a sleep mode in a first folding state of an electronic device according to an embodiment.

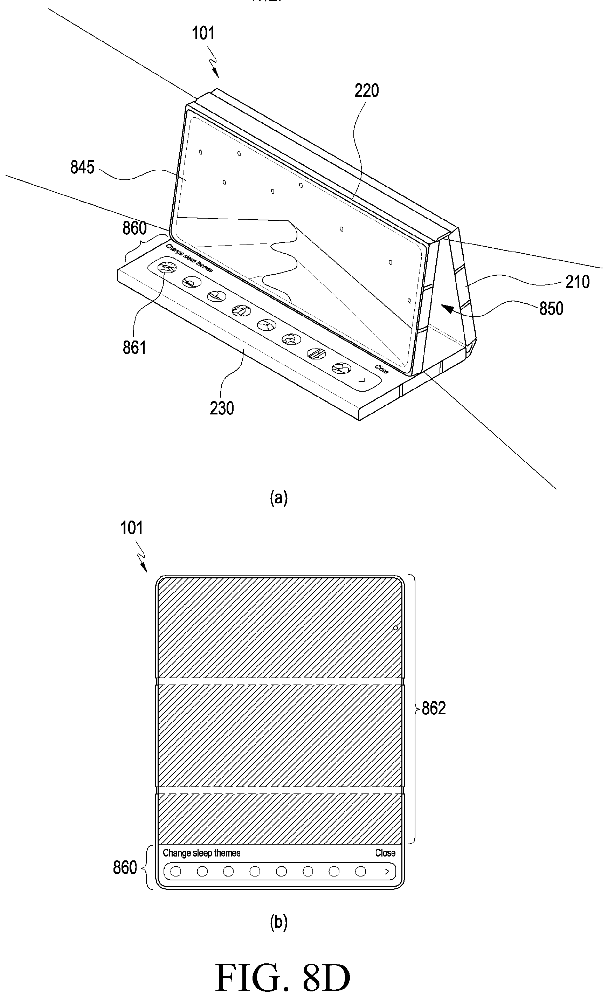

FIG. 8D is a view illustrating an operation of controlling a screen in a sleep mode of an electronic device according to an embodiment.

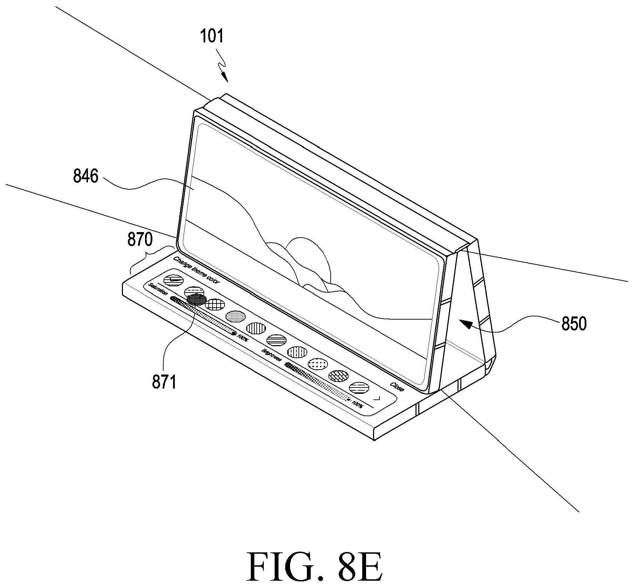

FIG. 8E is a view illustrating an operation of controlling a screen in a sleep mode of an electronic device according to an embodiment.

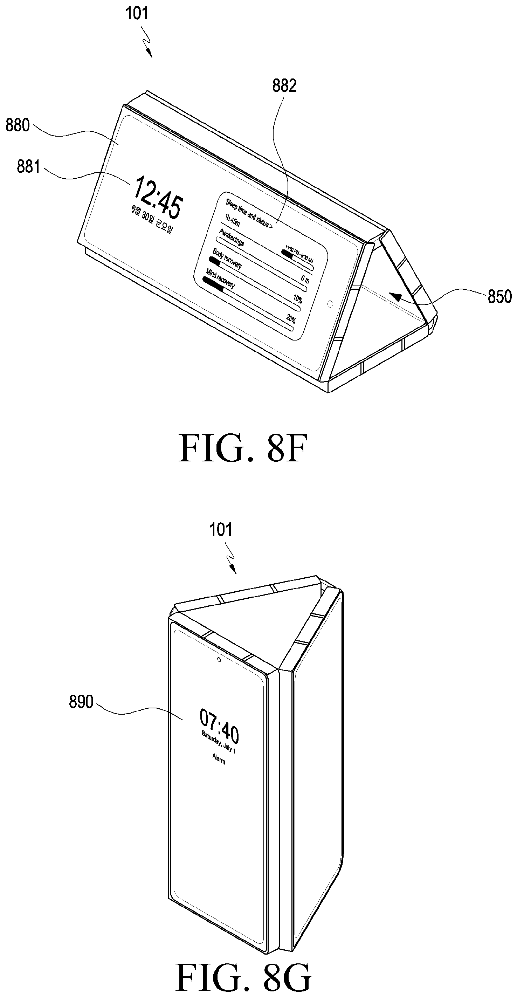

FIG. 8F is a view illustrating an operation according to a sleep mode in a first folding state of an electronic device according to an embodiment.
FIG. 8G is a view illustrating an operation according to a sleep mode in a second folding state of an electronic device according to an embodiment.

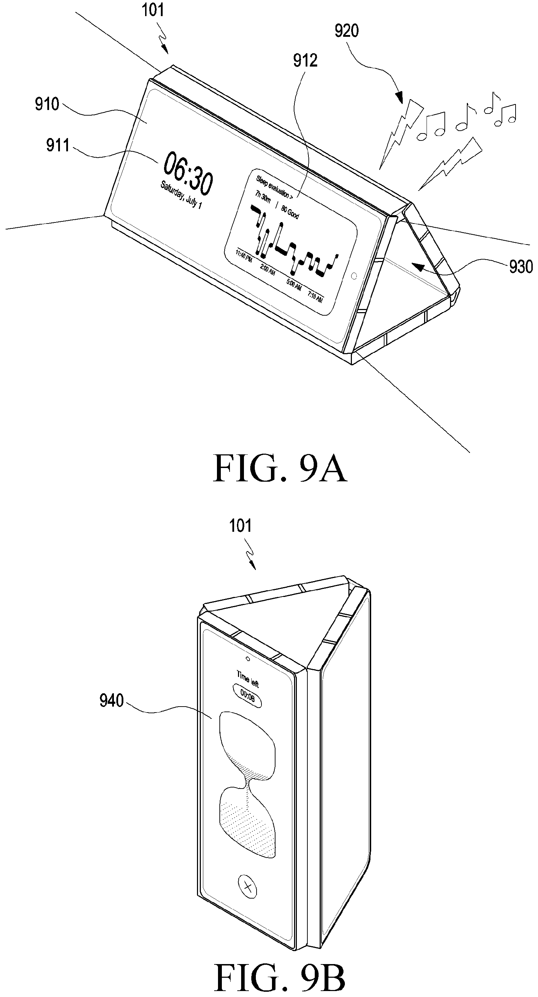

FIG. 9A is a view illustrating an operation according to a wake-up mode in a first folding state of an electronic device according to an embodiment.
FIG. 9B is a view illustrating an operation according to a wake-up mode in a second folding state of an electronic device according to an embodiment.

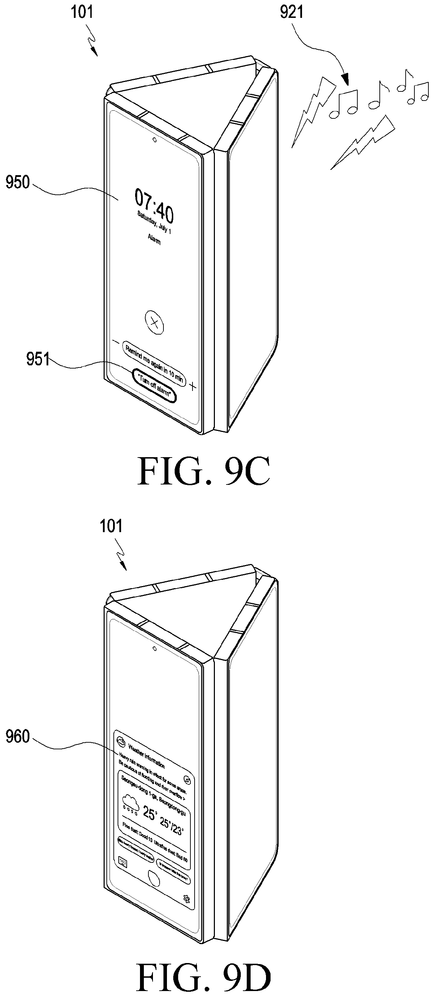

FIG. 9C is a view illustrating an operation according to a wake-up mode in a second folding state of an electronic device according to an embodiment.
FIG. 9D is a view illustrating an operation according to wake-up mode cancellation in a second folding state of an electronic device according to an embodiment.

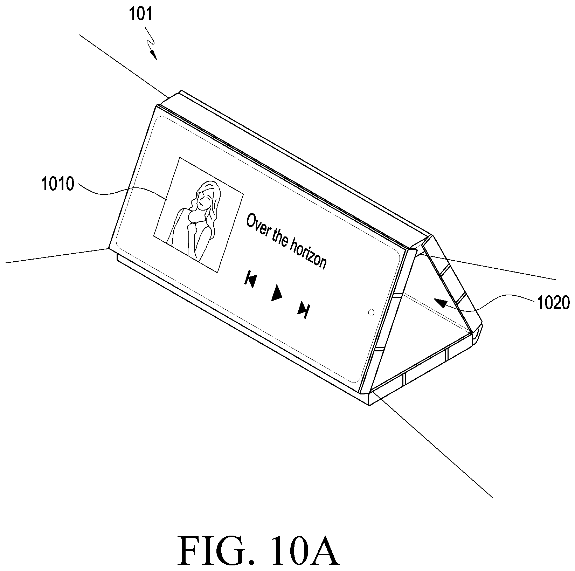

FIG. 10A is a view illustrating a music playback operation in a first folding state of an electronic device according to an embodiment.

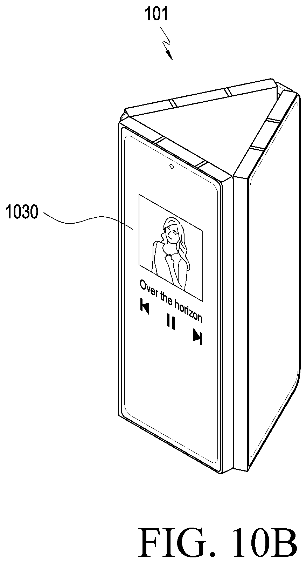

FIG. 10B is a view illustrating a music playback operation in a second folding state of an electronic device according to an embodiment.

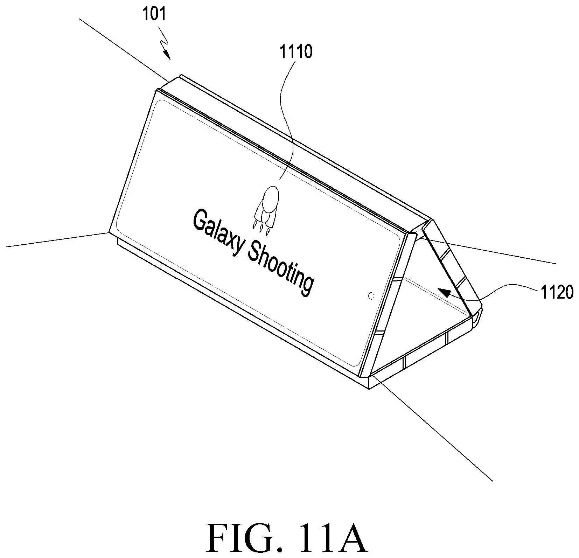

FIG. 11A is a view illustrating a video playback operation in a first folding state of an electronic device according to an embodiment.

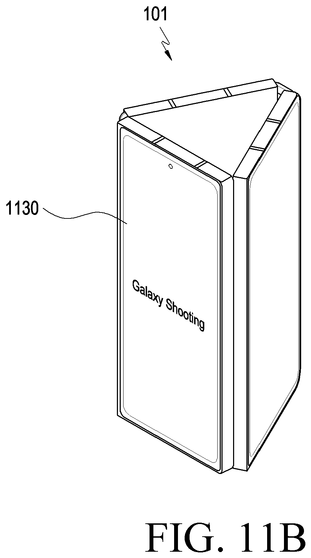

FIG. 11B is a view illustrating a video playback operation in a second folding state of an electronic device according to an embodiment.

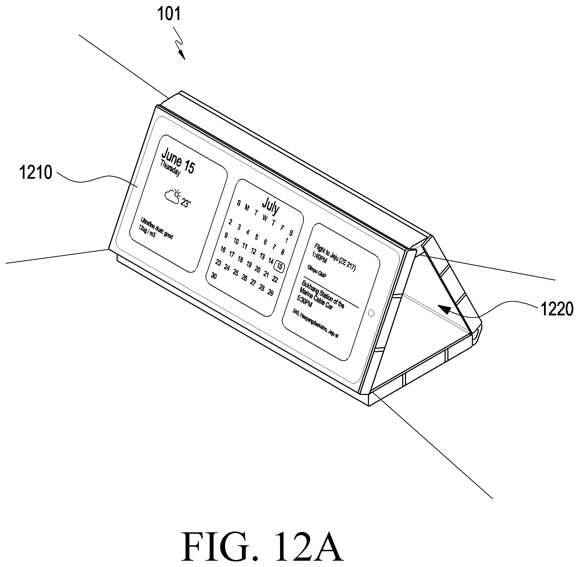

FIG. 12A is a view illustrating a default screen display operation in a first folding state of an electronic device according to an embodiment.

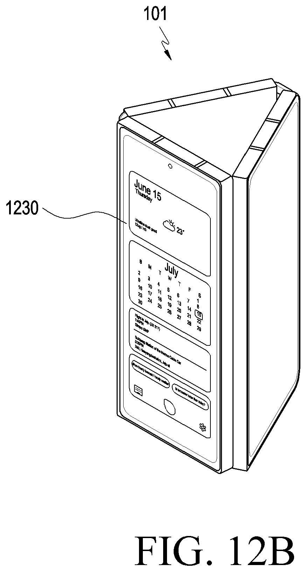

FIG. 12B is a view illustrating a default screen display operation in a second folding state of an electronic device according to an embodiment.

### [Mode for Carrying out the Invention]

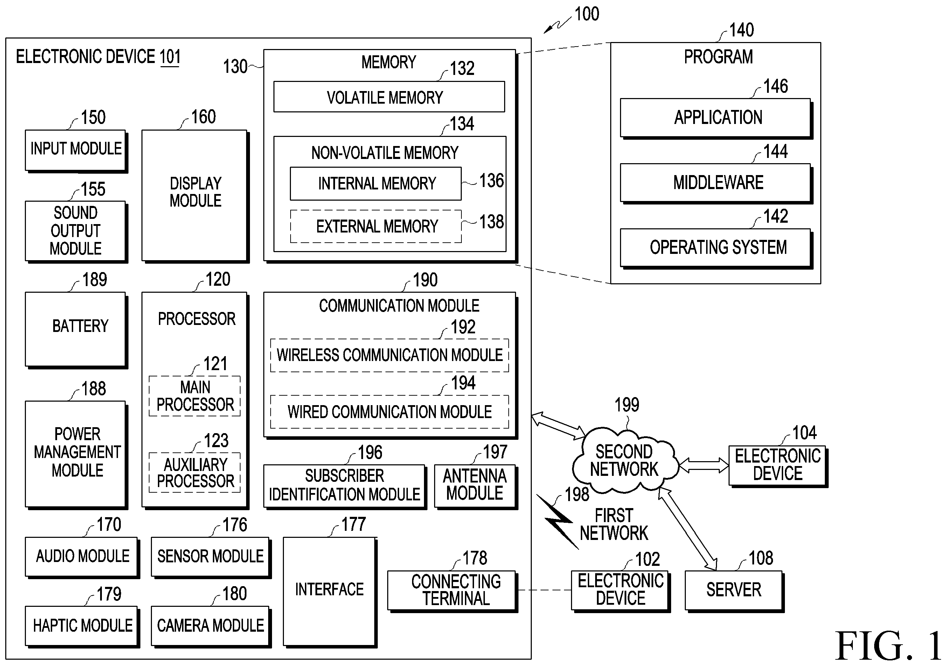

FIG. 1 is a block diagram illustrating an electronic device 101 in a network environment 100 according to an embodiment. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

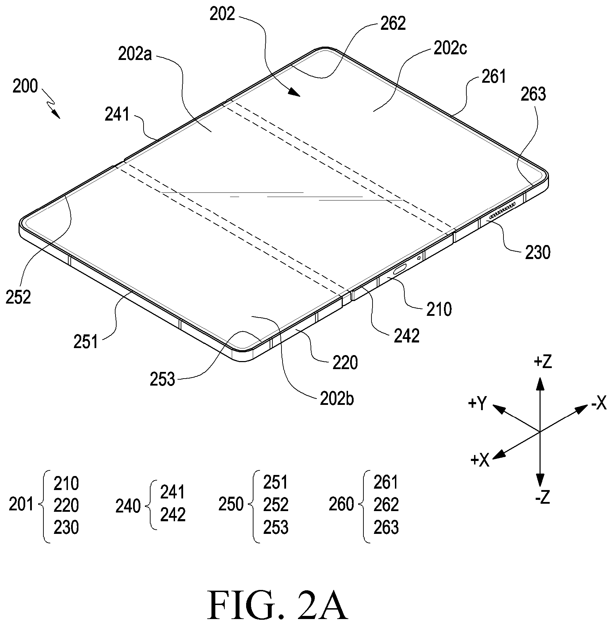

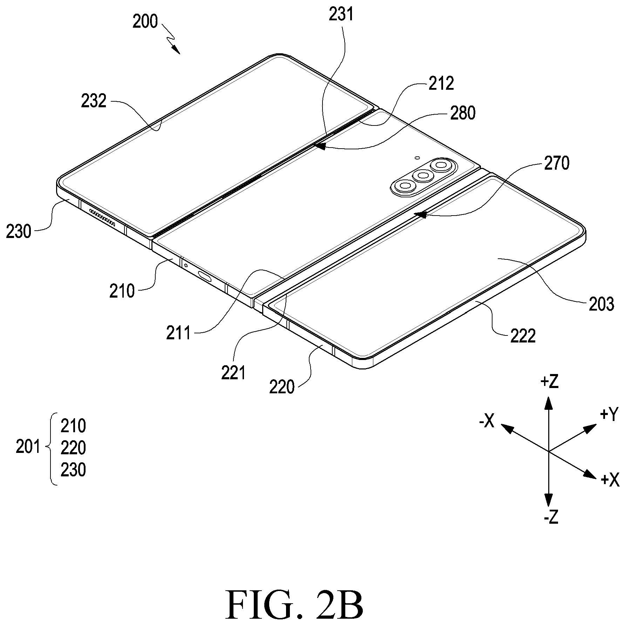

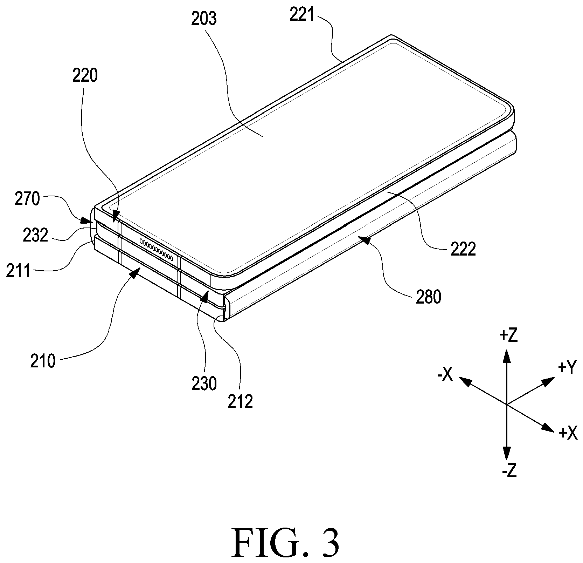

FIG. 2A is a perspective view illustrating an unfolded state of an electronic device 200 according to an embodiment of the disclosure. FIG. 2B is a perspective view illustrating an unfolded state of an electronic device 200 according to an embodiment of the disclosure. FIG. 2A may be a view of one side surface (e.g., front surface) of the electronic device 200 as obliquely viewed. FIG. 2B may be a view of the other side surface (e.g., rear surface) of the electronic device 200 as obliquely viewed. The components described with reference to FIGS. 2A and 2B may be identical in whole or part to the components described with reference to FIG. 1. Some or all of the components described with reference to FIGS. 2A and 2B may be the same as all or some of the components described with reference to FIGS. 3 to 12B. As illustrated in FIGS. 2A and 2B, the unfolded state of the electronic device 200 may be defined as a "first state."

According to an embodiment, the electronic device 200 may include a housing 201. The electronic device 200 may include a display 202. The housing 201 may form a space where the display 202 is disposed. The display 202 may be a flexible display 202. At least a portion of the display 202 may be folded or unfolded.

According to an embodiment, the housing 201 may include a first housing 210. The housing 201 may include a second housing 220. The housing 201 may include a third housing 230. The first housing 210 may be disposed between the second housing 220 and the third housing 230. The second housing 220 may be rotatably coupled to the first housing 210. The third housing 230 may be rotatably coupled to the first housing 210. The display 202 may be exposed through a first portion of the first housing 201, a second portion of the second housing 220, and a third portion of the third housing 230. The display 202 may include a first display area 202a corresponding to the first housing 210, a second display area 202b corresponding to the second housing 220, and a third display area 202c corresponding to the third housing 230.

According to an embodiment, the electronic device 200 may include supports 240, 250, and 260. The supports 240, 250, and 260 may be disposed between the housing 201 and the display 202. The supports 240, 250, and 260 may be coupled to the housing 201 and may support the display 202. The supports 240, 250, and 260 may be disposed to surround edges of the display 202. The supports 240, 250, and 260 may extend along the circumference of the housing 201. The supports 240, 250, and 260 may include a first support 240 disposed in the first housing 210, a second support 250 disposed in the second housing 220, and a third support 260 disposed in the third housing 230. The support 240, 250, or 260 may be referred to as a "body". The support 240, 250, or 260 may be referred to as a "frame". The support 240, 250, or 260 may be referred to as a "sealing member". The support 240, 250, or 260 may be referred to as a "peripheral part". The support 240, 250, or 260 may be referred to as a "circumferential part". The support 240, 250, or 260 may be referred to as a "peripheral structure". The support 240, 250, or 260 may be referred to as a "circumferential structure".

According to an embodiment, the supports 240, 250, and 260 may include a first support 240. The first support 240 may be disposed between the first housing 210 and the display 202. The first support 240 may be disposed along an edge of the first housing 210. The first support 240 may include a 1-1th support 241 and a 1-2th support 242. At least a portion of the display 202 may be disposed between the 1-1th support 241 and the 1-2th support 242. The 1-1th support 241 may be disposed at one end portion of the first housing 210, and the 1-2th support 242 may be disposed at the other end portion of the first housing 210. Each of the first, second, and third supports 240, 250, and 260 may be referred to as a "support". The support 240, 250, or 260 may include a non-conductive member. The support 240, 250, or 260 may be referred to as a "deco," "finishing member," or "non-conductive member."

According to an embodiment, the supports 240, 250, and 260 may include a second support 250. The second support 250 may be disposed between the second housing 220 and the display 202. The second support 250 may be disposed along an edge of the second housing 220. The second support 250 may include a 2-1th support 251, a 2-2th support 252, and a 2-3th support 253. At least a portion of the display 202 may be disposed between the 2-2th support 252 and the 2-3th support 253. The 2-1th support 251 may connect the 2-2th support 252 and the 2-3th support 253. The 2-1th support 251 may extend along an edge (e.g., the edge 222 of FIG. 2B) of the second housing 220. The 2-1th support 251 may be disposed between the edge 222 of the second housing 220 and the display 202. The 2-1th support 251 may be referred to as a "support frame" or a "first support frame". Each of the 2-2th support 252 and the 2-3th support 253 may be referred to as a "second support frame".

According to an embodiment, the supports 240, 250, and 260 may include a third support 260. The third support 260 may be disposed between the third housing 230 and the display 202. The third support 260 may be disposed along an edge of the third housing 230. The third support 260 may include a 3-1th support 261, a 3-2th support 262, and a 3-3th support 263. At least a portion of the display 202 may be disposed between the 3-2th support 262 and the 3-3th support 263. The 3-1th support 261 may connect the 3-2th support 262 and the 3-3th support 263. The 3-1th support 261 may extend along an edge (e.g., the edge 232 of FIG. 2B) of the third housing 230. The 3-1th support 261 may be disposed between the edge 232 of the third housing 230 and the display 202. The 3-1th support 261 may be referred to as a "support frame" or a "first support frame". Each of the 3-2th support 262 and the 3-3th support 263 may be referred to as a "second support frame".

According to an embodiment, the first housing 210 may include a 1-1th side portion 211 and a 1-2th side portion 212. The 1-1th side portion 211 and the 1-2th side portion 212 may form two opposite side surfaces, respectively, of the first housing 210. The second housing 220 may be coupled to the 1-1th side portion 211. The third housing 230 may be coupled to the 1-2th side portion 212. The 1-1th side portion 211 may be referred to as a "first coupling portion". The 1-2th side portion 212 may be referred to as a "second coupling portion". The 1-1th side portion 211 may be referred to as a "first portion". The 1-2th side portion 212 may be referred to as a "second portion".

According to an embodiment, the second housing 220 may include a 2-1th side portion 221 and a 2-2th side portion 222. The 2-1th side portion 221 and the 2-2th side portion 222 may form two opposite side surfaces, respectively, of the second housing 220. The 2-1th side portion 221 may be coupled to the first housing 210. The 2-2th side portion 222 may form a side surface of the housing 201. The 2-2th side portion 222 may be referred to as an "edge". The 2-1th side portion 221 may be referred to as a "third side portion". The 2-2th side portion 222 may be referred to as a "fourth side portion".

According to an embodiment, the electronic device 200 may include a cover display 203. The second housing 220 may form a space where the cover display 203 is disposed. For example, the cover display 203 may be disposed between the 2-1th side portion 221 and the 2-2th side portion 222. The cover display 203 may be a flat display.

In an embodiment, the second housing 220 may be disposed so that one side thereof surrounds an edge of a portion of the display 202 and the other side thereof surrounds an edge of the cover display 203. The electronic device 200 may include an inner space of the second housing 220 formed by being surrounding by the second housing 220 having the cover display 203 as one surface, a portion of the display 202 as the other surface parallel to the one surface, and a side surface including a 2-1th side portion 221 and a 2-2th side portion 222.

According to an embodiment, a camera may be mounted in an area of the cover display 203.

According to an embodiment, the third housing 230 may include a 3-1th side portion 231 and a 3-2th side portion 232. The 3-1th side portion 231 and the 3-2th side portion 232 may form two opposite side surfaces, respectively, of the third housing 230. The 3-1th side portion 231 may be coupled to the first housing 210. The 3-2th side portion 232 may form a side surface of the housing 201. The 3-2th side portion 232 may be referred to as an "edge". The 3-1th side portion 231 may be referred to as a "fifth side portion". The 3-2th side portion 232 may be referred to as a "sixth side portion".

According to an embodiment, the cover display may be further disposed in the space formed by the third housing 230. For example, the cover display may be disposed between the 3-1th side portion 231 and the 3-2th side portion 232. The cover display may be a flat display.

According to an embodiment, the electronic device 200 may include a first hinge 270 and a second hinge 280. The first hinge 270 may be disposed between the first housing 210 and the second housing 220. The first hinge 270 may be disposed between the 1-1th side portion 211 and the 2-1th side portion 221. The first hinge 270 may rotatably connect the first housing 210 and the second housing 220. The second hinge 280 may be disposed between the first housing 210 and the third housing 230. The second hinge 280 may be disposed between the 1-2th side portion 212 and the 3-1th side portion 231. The second hinge 280 may rotatably connect the first housing 210 and the third housing 230. The first hinge 270 may be referred to as a "first hinge member". The second hinge 280 may be referred to as a "second hinge member".

FIG. 3 is a perspective view illustrating a folded state of an electronic device 200 according to an embodiment of the disclosure. Some or all of the components described with reference to FIG. 3 may be the same as all or some of the components described with reference to FIGS. 1 to 2B. The components described with reference to FIG. 3 may be identical in whole or part to the components described with reference to FIGS. 4A to 12B. As illustrated in FIG. 3, the folded state of the electronic device 200 may be defined as a "second state."

According to an embodiment, the second housing 220 may be rotated with respect to the first housing 210. The first hinge 270 may provide a center of rotation to the second housing 220. The first hinge 270 may connect the 1-1th side portion 211 and the 2-1th side portion 221. The third housing 230 may be rotated with respect to the first housing 210. The second hinge 280 may provide a center of rotation to the third housing 230. The second hinge 280 may connect the 1-2th side portion 212 and the 3-1th side portion 231.

According to an embodiment, in the folded state of the electronic device 200, each of the first, second, and third housings 210, 220, and 230 may be arranged in one direction (e.g., the +Y direction). For example, the third housing 230 may be disposed above the first housing 210, and the second housing 220 may be disposed above the third housing 230. For example, the third housing 230 may be disposed between the first housing 210 and the second housing 220.

According to an embodiment, the edge 222 of the second housing 220 may be an area of the second housing 220 which overlaps an area in which the screen of the flexible display 202 is not visible from the outside of the housing (e.g., the second housing 220) when the flexible display 202 is viewed from the screen display direction (e.g., the +Z direction). For example, the edge 222 of the second housing 220 may include a bezel portion of the second housing 220.

According to an embodiment, the externally visible portion of the second housing 220 may further include a cover display 203. For example, the cover display 203 may be disposed between the 2-1th side portion 221 and the 2-2th side portion 222. The cover display 203 may be a flat display.

The width of the first hinge 270 may be larger than the width of the second hinge 280. For example, the length of the first hinge 270 extending in the +Z direction may be larger than the length of the second hinge 280 extending in the +Z direction.

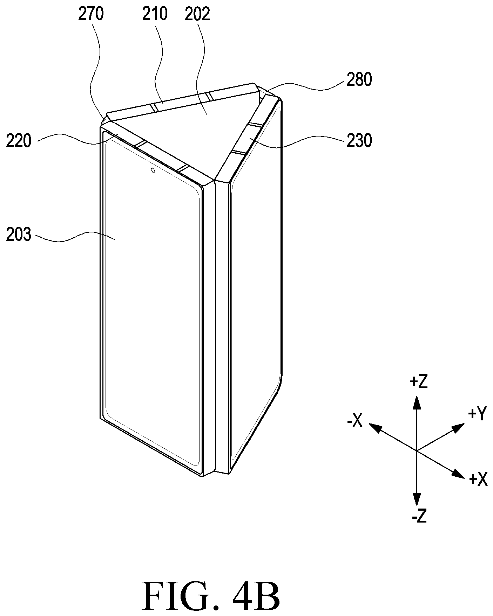

FIG. 4A is a view illustrating a partially folded state of an electronic device according to an embodiment. FIG. 4B is a view illustrating a partially folded state of an electronic device according to an embodiment.

The components described with reference to FIGS. 4A and 4B may be identical in whole or part to the components described with reference to FIGS. 1 to 3. The components described with reference to FIG. 4A may be identical in whole or part to the components described with reference to FIGS. 5 to 12B. As illustrated in FIG. 4A, a state in which the electronic device 200 is folded with a plurality of hinges (e.g., the first hinge 270 and the second hinge 280) having angles within a specific range (semi-folded), and the plurality of hinges are disposed in a landscape (or horizontal) direction may be defined as a "third state." For example, the third state may be referred to as prism flex.

As illustrated in FIG. 4A, when the first hinge 270 providing a rotation center to the second housing 220 with respect to the first housing 210 is folded to have an angle within a specific range, and the second hinge 280 providing a rotation center to the third housing 230 with respect to the first housing 210 is folded to have an angle within a specific range, the first housing 210, the second housing 220, and the third housing 230 may form a triangle in the +X direction and/or -X direction.

According to an embodiment, the display 202 may be folded to have a triangular prism-shaped space, and the cover display 203 may be disposed toward the front surface. According to an embodiment, a surface of the third housing 230 on which the display 202 is not disposed may contact the floor.

As illustrated in FIG. 4B, a state in which the electronic device 200 is folded with a plurality of hinges (e.g., the first hinge 270 and the second hinge 280) having angles within a specific range (semi-folded), and the plurality of hinges are disposed in a portrait (or vertical) direction may be defined as a "fourth state." For example, the fourth state may be referred to as prism stand.

As illustrated in FIG. 4B, when the first hinge 270 providing a rotation center to the second housing 220 with respect to the first housing 210 is folded to have an angle within a specific range, and the second hinge 280 providing a rotation center to the third housing 230 with respect to the first housing 210 is folded to have an angle within a specific range, the first housing 210, the second housing 220, and the third housing 230 may form a triangle in the +Z direction and/or -Z direction.

According to an embodiment, the display 202 may be folded to have a triangular prism-shaped space, and the cover display 203 may be disposed toward the front surface. According to an embodiment, the sides of the first housing 210 to the third housing 230 in the same direction may contact the floor.

FIG. 5 is a view illustrating an operation of an electronic device according to a folding state of the electronic device according to an embodiment.

Referring to FIG. 5, in operation 510, the electronic device (e.g., the electronic device 101 of FIG. 1, the processor 120 of FIG. 1, the electronic device 200 of FIG. 2A, the electronic device 200 of FIG. 2B) may identify a folding state of the electronic device based on a sensing value of the first sensor (e.g., the sensor module 176 of FIG. 1), a sensing value of the second sensor (e.g., the sensor module 176 of FIG. 1), and a sensing value of the third sensor (e.g., the sensor module 176 of FIG. 1).

According to an embodiment, the folding state may be identified based on at least one of whether the first hinge (e.g., the first hinge 270 of FIG. 2B, the first hinge 270 of FIG. 3, the first hinge 270 of FIG. 4A, or the first hinge 270 of FIG. 4B) is folded, whether the second hinge (e.g., the second hinge 280 of FIG. 2B, the second hinge 280 of FIG. 3, the second hinge 280 of FIG. 4A, or the second hinge 280 of FIG. 4B) is folded, an angle between the first housing (e.g., the first housing 210 of FIG. 2A or the first housing 210 of FIG. 2B) and the second housing (e.g., the second housing 220 of FIG. 2A or the second housing 220 of FIG. 2B) with respect to the first hinge, an angle between the first housing and the third housing (e.g., the third housing 230 of FIG. 2A or the third housing 230 of FIG. 2B) with respect to the second hinge, a direction of the electronic device, or an activated portion of the display (e.g., the display module 160 of FIG. 1, the display 202 of FIG. 2A, or the cover display 203 of FIG. 3).

According to an embodiment, the electronic device may sense a first angle between the first housing and the second housing through the first sensor. According to an embodiment, the electronic device may sense a second angle between the first housing and the third housing through the second sensor.

According to an embodiment, the electronic device may sense a direction of the electronic device based on at least one sensor. For example, the at least one sensor may include a gyro sensor. According to an embodiment, the at least one sensor may also include at least one of the first sensor or the second sensor.

According to an embodiment, the electronic device may identify the folding state based on the first angle between the first housing and the second housing sensed through the first sensor, the second angle between the first housing and the third housing sensed through the second sensor, and the direction of the electronic device sensed through the third sensor.

According to an embodiment, in operation 520, the electronic device may display a screen related to an application being executed on the cover display (e.g., the display module 160 of FIG. 1, the cover display 203 of FIG. 2B, the cover display 203 of FIG. 3, the cover display 203 of FIG. 4A, or the cover display 203 of FIG. 4B) based on identifying that the folding state is the first folding state.

According to an embodiment, the first folding state (e.g., the third state of FIG. 4A) may be a state in which the direction of the electronic device is such that a portion of a fifth area opposite the third display area of the third housing contacts a ground, and the first housing to the third housing are in-folded for the first angle and the second angle to be acute angles within a set range. According to an embodiment, based on a portion of the fifth area opposite the third display area of the third housing being in contact with the ground, it may be a state in which the first hinge and the second hinge are disposed in a horizontal direction (or a horizontal direction parallel to the ground). For example, the first angle and the second angle may be about 60 degrees. For example, the first folding state may be referred to as a prism flex state. The prism flex state may be a mounting mode configured by folding inward with each hinge as a reference axis to form a triangular shape, with the cover display facing forward.

According to an embodiment, when the electronic device is in the first folding state, the electronic device may predefine screens to be displayed on the cover display for each application. For example, when the electronic device is changed from an unfolded state to the first folding state while being used, it may display predefined screens for each application being used.

According to an embodiment, while the folding state of the electronic device is not the first folding state, based on an event occurring, the electronic device may display a message inducing a change of the folding state to the first folding state. For example, when the condition for activating the sleep mode is that the electronic device is in the first folding state and a set time arrives, the electronic device may display a message inducing a change to the first folding state when the set time arrives but the folding state of the electronic device is not the first folding state. According to an embodiment, an operation of displaying a message to induce changing the folding state of the electronic device to the first folding state is described below with reference to FIG. 8B.

According to an embodiment, the electronic device may display a screen related to an application corresponding to an event on the cover display based on identifying that the folding state is the first folding state. For example, when a set time such as a sleep mode or wake-up mode arrives and the electronic device identifies that the folding state of the electronic device is the first folding state, it may display an application screen corresponding to the sleep mode or wake-up mode on the cover display.

For example, the application screen corresponding to the sleep mode may include videos helpful for sleep and UIs for controlling the sleep mode. The application screen corresponding to the wake-up mode may include sleep time information, sleep analysis information, and current time information.

According to an embodiment, when the electronic device displays an application execution screen through the flexible display in an unfolded state and the folding state is changed to the first folding state, it may display a screen related to the execution screen of the application displayed on the flexible display on the cover display.

For example, based on the folding state being changed to the first folding state while displaying an execution screen of an application including a video (e.g., content such as a game or movie) on at least a partial area of the flexible display, the electronic device may display a screen corresponding to the video on the cover display.

According to an embodiment, when there is no predefined screen corresponding to the first folding state for an application running while the electronic device is in an unfolded state, the electronic device may display a default screen on the cover display. For example, the default screen may be set by a manufacturer or a user. For example, the default screen may include weather information, date information, and/or schedule information.

According to an embodiment, an operation of displaying the default screen is described below in more detail with reference to FIG. 12A.

According to an embodiment, the electronic device may display at least one color light related to the application on the flexible display (e.g., the display module 160 of 1, the display 202 of FIG. 2B, the display 202 of FIG. 4A, or the display 202 of FIG. 4B).

According to an embodiment, the electronic device may provide a lighting effect based on the color light to the left and right of the electronic device by displaying the color light on the flexible display in the first folding state. According to an embodiment, an operation of displaying the color light in the first folding state is described below in more detail in FIG. 6A.

According to an embodiment, the color light may be displayed on at least a partial area of the flexible display. According to an embodiment, the color light may include at least one color.

According to an embodiment, the electronic device may display color lights on a plurality of areas included in the flexible display, respectively. For example, the electronic device may display color lights of the same color or color lights of different colors for the plurality of areas. According to an embodiment, an embodiment of displaying color lights for a plurality of areas of the flexible display is described below in more detail with reference to FIGS. 7A to 7D.

According to an embodiment, the electronic device may output a sound related to the application. According to an embodiment, the electronic device may display the at least one color light in at least one color determined for the plurality of areas based on a sound range of the output sound. For example, the electronic device may divide the area of the flexible display into a first area corresponding to the first housing, a second area corresponding to the second housing, and a third area corresponding to the third housing. The electronic device may display color light of a color and/or brightness based on the volume of a low frequency range (e.g., 63, 125, 250 (Hz)) in the first area. The electronic device may display color light of a color and/or brightness based on the volume of a mid frequency range (e.g., 500, 1k, 2k (kHz)) in the second area. The electronic device may display color light of a color and/or brightness based on the volume of a high frequency range (e.g., 4k, 8k, 16k (kHz)) in the third area.

According to an embodiment, the electronic device may display the at least one color light at at least one brightness determined for the plurality of areas based on the magnitude of the output sound. For example, when outputting stereo sound (or surround) in the first folding state, the electronic device may display color lights of different brightnesses for the plurality of areas of the flexible display according to the magnitude of the left output sound and the magnitude of the right output sound. According to an embodiment, an operation of displaying color light based on the output sound is described below in more detail with reference to FIGS. 10A and 11A.

According to an embodiment, the electronic device may adjust the color and brightness of the color light in real-time. The electronic device may adjust the color and brightness of the color light for the plurality of areas in real-time.

For example, the electronic device may gradually change the color of the at least one color light to a color with a low color temperature based on activating a mode for inducing sleep. The higher the color temperature, the closer to blue, and the lower the color temperature, the closer to yellow.

According to an embodiment, the electronic device may gradually reduce the brightness of the at least one color light based on activating a mode for inducing sleep.

According to an embodiment, the electronic device may display the at least one color light in a color based on at least one of a weather type or a temperature based on displaying a screen related to a weather application on the cover display. For example, the electronic device may display color light in a color closer to blue as the temperature is lower and closer to red as the temperature is higher. According to an embodiment, the electronic device may display color light such that the color has lower brightness when the weather is cloudy and higher brightness when the weather is clear.

According to an embodiment, an operation of displaying a screen related to a weather application on the cover display is described below in more detail with reference to FIG. 12A.

According to an embodiment, when a video (e.g., content such as a game or movie) is displayed on the cover display, the electronic device may display the at least one color light in a color determined based on the sound of the video on the flexible display. For example, the electronic device may display color light of a color and/or brightness based on the volume of a low frequency range (e.g., 63, 125, 250 (Hz)) in an area corresponding to the low frequency range (e.g., the first area corresponding to the first housing). The electronic device may display color light of a color and/or brightness based on the volume of a mid frequency range (e.g., 500, 1k, 2k (kHz)) in an area corresponding to the mid frequency range (e.g., the second area corresponding to the second housing). The electronic device may display color light of a color and/or brightness based on the volume of a high frequency range (e.g., 4k, 8k, 16k (kHz)) in an area corresponding to the high frequency range (e.g., the third area corresponding to the third housing). According to an embodiment, an operation of displaying a video on the cover display is described below in more detail with reference to FIG. 11A.

According to an embodiment, when a default screen is displayed on the cover display in the first folding state, the electronic device may display the at least one color light related to a function included in the default screen on the flexible display. For example, when weather information is included in the default screen, the electronic device may display color light of a color and brightness related to the weather information on the flexible display. According to an embodiment, an operation of displaying the default screen is described below in more detail with reference to FIG. 12A.

According to an embodiment, the electronic device may display a second screen related to the application corresponding to the second folding state on the cover display based on the folding state being changed from the first folding state to the second folding state.

According to an embodiment, the second folding state (e.g., the fourth state of FIG. 4B) may be a state in which the first housing to the third housing are in-folded for the first angle and the second angle to be acute angles within the set range, and a side of the first housing, a side of the second housing, and a side of the third housing contact the ground.

For example, the second folding state may be a state in which the first hinge and the second hinge are disposed in a portrait direction (or vertical direction). For example, the second folding state may be referred to as a prism stand state. The prism stand state is a form in which the electronic device is rotated from the prism flex state and mounted vertically. According to an embodiment, it may be mounted in two directions by rotating left or right.

According to an embodiment, when the electronic device is in the second folding state, the electronic device may predefine screens to be displayed on the cover display for each application. For example, when the electronic device is changed from the first folding state to the second folding state, it may display predefined screens for each application being used.

According to an embodiment, the electronic device may provide a lighting effect based on the color light upward from the electronic device by displaying color light on the flexible display in the second folding state. According to an embodiment, according to the state of the floor, a lighting effect based on the color light may also be provided downward from the electronic device. According to an embodiment, an operation of displaying color light in the second folding state is described below in more detail in FIG. 6B.

According to an embodiment, the electronic device may stop displaying the at least one color light on the flexible display based on identifying that the folding state is the second folding state.

According to an embodiment, operations when the folding state of the electronic device is changed from the first folding state to the second folding state are described below in more detail with reference to FIGS. 8G, 9B, 9C, 9D, 10B, 11B, and 12B.

According to an embodiment, the electronic device may be changed from an unfolded state to the second folding state without going through the first folding state. According to an embodiment, the electronic device may display predefined screens corresponding to the second folding state for each application on the cover display. According to an embodiment, when there is no predefined screen corresponding to the second folding state for an application, the electronic device may display a default screen. For example, the default screen may be an AI assistant mode screen. The AI assistant mode screen may include a UI indicating that it is in a speech waiting mode.

According to an embodiment, a default screen display operation in the second folding state is described below in more detail with reference to FIG. 12B.

As such, by displaying color light related to an application being executed on the flexible display in the first folding state, the user experience may be improved by providing information intuitively.

FIG. 6A is a view illustrating a color light display operation in a first folding state of an electronic device according to an embodiment.

Referring to FIG. 6A, the electronic device 101 (e.g., the electronic device 101 of FIG. 1, the processor 120 of FIG. 1, the electronic device 200 of FIG. 2A, the electronic device 200 of FIG. 2B) may display a screen 610 related to an application being executed on the cover display (e.g., the display module 160 of FIG. 1, the cover display 203 of FIG. 2B, the cover display 203 of FIG. 3, the cover display 203 of FIG. 4A, or the cover display 203 of FIG. 4B) in the first folding state (e.g., prism flex). For example, the screen 610 related to the application being executed may be a screen related to an application that was running while the electronic device 101 was in an unfolded state, or a screen related to an event (e.g., sleep mode or wake-up mode) for which the first folding state is a condition.

According to an embodiment, the electronic device 101 may display color light 620 on the flexible display in the first folding state. According to an embodiment, in the first folding state, as the left and right sides of the electronic device 101 are open, the electronic device 101 may provide a lighting effect based on the color light displayed on the flexible display.

FIG. 6B is a view illustrating a color light display operation in a second folding state of an electronic device according to an embodiment.

Referring to FIG. 6B, the electronic device 101 may display a screen 611 related to an application being executed on the cover display in the second folding state (e.g., prism stand). For example, the screen 611 related to the application being executed may be a different screen from the screen displayed in the first folding state. For example, the screen 611 related to the application being executed may be an AOD screen related to the screen displayed in the first folding state, or a screen related to another function of the application.

According to an embodiment, the electronic device 101 may display color light 621 on the flexible display in the second folding state. According to an embodiment, in the first folding state, as the top and bottom surfaces of the electronic device 101 are open, the electronic device 101 may provide a lighting effect based on the color light displayed on the flexible display. For example, when the electronic device 101 is mounted on the floor, the electronic device may have difficulty providing a lighting effect downward from the electronic device 101, but may provide a lighting effect upward.

FIG. 7A is a view illustrating an example of color light displayed by an electronic device according to an embodiment.

Referring to FIG. 7A, the electronic device 101 (e.g., the electronic device 101 of FIG. 1, the processor 120 of FIG. 1, the electronic device 200 of FIG. 2A, the electronic device 200 of FIG. 2B) may display color light of the same color and brightness on the plurality of areas 710, 720, 730 of the flexible display (e.g., the display module 160 of 1, the display 202 of FIG. 2B, the display 202 of FIG. 4A, or the display 202 of FIG. 4B).

For example, the electronic device 101 may display color light of the same color and brightness in the first area 710 corresponding to the first housing (e.g., the first housing 210 of FIG. 2A or the first housing 210 of FIG. 2B) of the flexible display, the second area 720 corresponding to the second housing (e.g., the second housing 220 of FIG. 2A or the second housing 220 of FIG. 2B), and the third area 730 corresponding to the third housing (e.g., the third housing 230 of FIG. 2A or the third housing 230 of FIG. 2B).

Although FIG. 7A illustrates that color light is displayed in all of the first area 710, the second area 720, and the third area 730, the disclosure is not limited thereto, and color light may be displayed in only at least one of the first area 710, the second area 720, and the third area 730.

FIG. 7B is a view illustrating an example of color light displayed by an electronic device according to an embodiment.

Referring to FIG. 7B, the electronic device 101 may display color lights of different colors and/or brightnesses for the plurality of areas 710, 720, 730 of the flexible display.

For example, the electronic device 101 may display a first color light in the first area 710 corresponding to the first housing of the flexible display, display a second color light in the second area 720 corresponding to the second housing, and display a third color light in the third area 730 corresponding to the third housing. According to an embodiment, the first color light to the third color light may differ in at least one of color or brightness. According to an embodiment, two of the first color light to the third color light may have the same color and brightness, and the remaining one may have a different color and/or different brightness.

For example, when sound is output, the electronic device 101 may determine at least one of color or brightness based on the magnitude of the frequency range corresponding to each area of the flexible display. The electronic device 101 may display color light of the determined color or brightness in each area.

Although FIG. 7B illustrates that color light is displayed in all of the first area 710, the second area 720, and the third area 730, the disclosure is not limited thereto, and color light may be displayed in only at least one of the first area 710, the second area 720, and the third area 730.

FIG. 7C is a view illustrating an example of color light displayed by an electronic device according to an embodiment.

Referring to FIG. 7C, the electronic device 101 may display color lights of different colors and/or brightnesses for the plurality of areas 711, 712, 713, 721, 722, 723 of the flexible display.

For example, the electronic device 101 may display a first color light in the 1-1th area 711, which is a right area of the first area corresponding to the first housing of the flexible display, display a second color light in the 1-2th area 712, which is a left area of the first area, display a third color light in the 2-1th area 721, which is a right area of the second area corresponding to the second housing, display a fourth color light in the 2-2th area 722, which is a left area of the second area corresponding to the second housing, display a fifth color light in the 3-1th area 731, which is a right area of the third area corresponding to the third housing, and display a sixth color light in the 3-2th area 732, which is a left area of the third area corresponding to the third housing.

According to an embodiment, the first color light, the third color light, and the fifth color light may have the same color and brightness, and the second color light, the fourth color light, and the sixth color light may have the same color and brightness. The color and brightness of the first color light, the third color light, and the fifth color light and the color and brightness of the second color light, the fourth color light, and the sixth color light may be different from each other.

According to an embodiment, when the electronic device 101 is in the first folding state, at least one of the color or brightness of the lighting effect on the left side of the electronic device 101 and the lighting effect on the right side may be different.

Although FIG. 7C illustrates that color light is displayed in all of the 1-1th area 711, the 1-2th area 712, the 2-1th area 721, the 2-2th area 722, the 3-1th area 731, and the 3-2th area 732, the disclosure is not limited thereto, and color light may be displayed in only at least one of the 1-1th area 711, the 1-2th area 712, the 2-1th area 721, the 2-2th area 722, the 3-1th area 731, and the 3-2th area 732.

FIG. 7D is a view illustrating an example of color light displayed by an electronic device according to an embodiment.

Referring to FIG. 7D, the electronic device 101 may display color lights of different colors and/or brightnesses for the plurality of areas 711, 712, 713, 721, 722, 723 of the flexible display.

For example, the electronic device 101 may display a first color light in the 1-1th area 711, which is a right area of the first area corresponding to the first housing of the flexible display, display a second color light in the 1-2th area 712, which is a left area of the first area, display a third color light in the 2-1th area 721, which is a right area of the second area corresponding to the second housing, display a fourth color light in the 2-2th area 722, which is a left area of the second area corresponding to the second housing, display a fifth color light in the 3-1th area 731, which is a right area of the third area corresponding to the third housing, and display a sixth color light in the 3-2th area 732, which is a left area of the third area corresponding to the third housing.

According to an embodiment, the first color light and the second color light may have the same color but different brightness. The third color light and the fourth color light may have the same color but different brightness. The fifth color light and the sixth color light may have the same color but different brightness.

For example, when stereo sound is output and the left and right sound volumes are different, the brightness of the color lights in the plurality of areas may be different based on the sound volume. For example, when the right sound volume is low and the left sound volume is high, the brightness of the first color light, the third color light, and the fifth color light corresponding to the right side may be low, and the brightness of the second color light, the fourth color light, and the sixth color light corresponding to the right side may be high.

According to an embodiment, when the volume of stereo sound (or surround) changes in real-time (e.g., adjusting the volume as if the sound is moving from left to right), the electronic device 101 may adjust the brightness of the color light in each area in real-time based on the sound volume. As a result, the user may visually experience changes in sound.

According to an embodiment, when the electronic device is in the first folding state, the brightness of the lighting effect on the left side of the electronic device and the lighting effect on the right side may be different.

Although FIG. 7D illustrates that color light is displayed in all of the 1-1th area 711, the 1-2th area 712, the 2-1th area 721, the 2-2th area 722, the 3-1th area 731, and the 3-2th area 732, the disclosure is not limited thereto, and color light may be displayed in only at least one of the 1-1th area 711, the 1-2th area 712, the 2-1th area 721, the 2-2th area 722, the 3-1th area 731, and the 3-2th area 732.

FIG. 8A is a view illustrating a sleep mode entry operation of an electronic device according to an embodiment.

Referring to FIG. 8A, when a set time 810 is reached, the electronic device 101 (e.g., the electronic device 101 of FIG. 1, the processor 120 of FIG. 1, the electronic device 200 of FIG. 2A, the electronic device 200 of FIG. 2B) may display a notification 820 for entering the sleep mode. For example, when the electronic device 101 is in a folded state, it may display the notification 820 on the cover display. When the electronic device 101 is in an unfolded state, it may display the notification 820 on the flexible display.

According to an embodiment, when a user input 821 for entering the sleep mode is received through the notification 820, the electronic device 101 may display a message for inducing a change of the folding state of the electronic device to the first folding state, as illustrated in FIG. 8B.

FIG. 8B is a view illustrating a sleep mode entry operation of an electronic device according to an embodiment.

Referring to FIG. 8B, the electronic device 101 may display a message 830 inducing a change of the folding state of the electronic device to the first folding state (e.g., prism flex) for activating the sleep mode.

Although FIGS. 8A and 8B illustrate an embodiment of changing the electronic device 101 to the first folding state when a sleep notification occurs, a sleep notification may also occur at a set time while the electronic device 101 is mounted in the first folding state. The electronic device 101 may receive a user input for entering the sleep mode through a UI included in the sleep notification.

FIG. 8C is a view illustrating an operation according to a sleep mode in a first folding state of an electronic device according to an embodiment.

Referring to FIG. 8C, when the sleep mode is activated, the electronic device 101 may display a screen 840 related to the sleep mode on the cover display, output a sound for inducing sleep, and display color light 850 on the flexible display. For example, the screen 840 related to the sleep mode may include a sleep induction interval time 841 and background graphics that induce sleep.

According to an embodiment, the screen 840 related to the sleep mode may include a UI 842 for setting background graphics, a UI 843 for sound settings, and a UI 844 for setting the color light 850. According to an embodiment, at least one of the background graphics, sound, and color light may be turned off through the UI 842 for setting background graphics, the UI 843 for sound settings, and the UI 844 for setting the color light 850.

For example, when the sleep induction interval is set to 10 minutes, the electronic device 101 may provide the color light 850 by gradually lowering the color temperature from 6500 kelvin to 3000 kelvin to induce deep sleep during the interval time. According to an embodiment, the electronic device 101 may gradually reduce the brightness of the color light 850 from 100% to 0%. According to an embodiment, the electronic device 101 may gradually reduce the sound volume from 100% to 0%.

FIG. 8D is a view illustrating an operation of controlling a screen in a sleep mode of an electronic device according to an embodiment.

Referring to FIG. 8D(a), the electronic device 101 may change the folding state such that the angle between the first housing 210 and the second housing 220 is further narrowed in the first folding state, and the end of the second housing 220 is positioned in the flexible display portion corresponding to the third housing 230.

According to an embodiment, when a portion of the area corresponding to the third housing of the flexible display is exposed to the outside, the electronic device 101 may display a background graphic list 860 for changing the background graphics in the exposed area.

For example, when the angle between the first housing 210 and the second housing 220 sensed through a sensor (e.g., the sensor module 176 of FIG. 1) is an acute angle smaller than 60 degrees (e.g., about 20 degrees), and the angle between the first housing 210 and the third housing 230 is an acute angle greater than 60 degrees (e.g., about 80 degrees), the electronic device 101 may identify an area exposed to the outside among the areas corresponding to the third housing. According to an embodiment, the electronic device 101 may display a background graphic list 860 for changing graphics in an area exposed to the outside among the areas corresponding to the third housing.

According to an embodiment, when a user input selecting a UI 861 corresponding to a specific background graphic in the background graphic list 860 is received, the electronic device 101 may display a background graphic 845 corresponding to the selected UI on the cover display.

According to an embodiment, the electronic device 101 may display the color light 850 through at least a partial area of the flexible display. For example, as illustrated in FIG. 8D(b), when a portion of the area corresponding to the third housing of the flexible display is exposed to the outside due to the folding state change, the electronic device 101 may display the background graphic list 860 in the exposed area among the area corresponding to the first housing, the area corresponding to the second housing, and the area corresponding to the third housing of the flexible display, and display color light in the unexposed area 862.

FIG. 8E is a view illustrating an operation of controlling a screen in a sleep mode of an electronic device according to an embodiment.

Referring to FIG. 8E, the electronic device 101 may change the folding state such that the angle between the first housing and the second housing is further narrowed in the first folding state, and the end of the second housing is positioned in the flexible display portion corresponding to the third housing.

According to an embodiment, when a portion of the area corresponding to the third housing of the flexible display is exposed to the outside, a color list 870 for changing the color of the background graphics may be displayed in the exposed area.

According to an embodiment, when a user input selecting a UI 871 corresponding to a specific color in the color list 870 is received, the electronic device 101 may display a background graphic 846 reflecting the color corresponding to the selected UI on the cover display.

According to an embodiment, the saturation and/or brightness of the background graphics may be further adjusted through the exposed area.

According to an embodiment, the electronic device 101 may display the color light 850 through at least a partial area of the flexible display. For example, when a portion of the area corresponding to the third housing of the flexible display is exposed to the outside due to the folding state change, the electronic device 101 may display color light in the unexposed areas among the area corresponding to the first housing, the area corresponding to the second housing, and the area corresponding to the third housing of the flexible display.

FIG. 8F is a view illustrating an operation according to a sleep mode in a first folding state of an electronic device according to an embodiment.

Referring to FIG. 8F, the electronic device 101 may display an always on display (AOD) screen 880 after a set time has passed since the sleep mode was activated. For example, the AOD screen 880 may include current time information 881 and sleep-related information 882.

According to an embodiment, the electronic device 101 may cancel 851 the display of color light.

FIG. 8G is a view illustrating an operation according to a sleep mode in a second folding state of an electronic device according to an embodiment.

Referring to FIG. 8G, when the folding state is changed from the first folding state to the second folding state (e.g., prism stand), the electronic device 101 may stop the sleep mode from the sleep mode activation state illustrated in FIG. 8C. For example, the electronic device 101 may not output sound for sleep and may not display color light.

According to an embodiment, the electronic device 101 may operate in a desk clock mode displaying the current time 890 based on being changed to the second folding state.

According to an embodiment, when the electronic device 101 is changed from the second folding state back to the first folding state, it may reactivate the stopped sleep mode.

FIG. 9A is a view illustrating an operation according to a wake-up mode in a first folding state of an electronic device according to an embodiment.

Referring to FIG. 9A, when a set time is reached in the sleep mode, the electronic device 101 (e.g., the electronic device 101 of FIG. 1, the processor 120 of FIG. 1, the electronic device 200 of FIG. 2A, the electronic device 200 of FIG. 2B) may terminate the sleep mode and activate the wake-up induction mode. For example, the set time for activating the wake-up induction mode may be a set interval time (e.g., 10 minutes) before the wake-up alarm time.

According to an embodiment, the electronic device 101 may display a screen 910 related to the wake-up induction mode on the cover display. For example, the screen 910 related to the wake-up induction mode may include current time information 911 and sleep analysis information 912.

According to an embodiment, the electronic device 101 may display color light 930 on the flexible display during the 10-minute interval time. For example, the electronic device 101 may gradually change the color from 3000 kelvin to 6500 kelvin color temperature that may induce waking. According to an embodiment, the electronic device 101 may display color light such that the brightness gradually increases from 0% to 100%.

According to an embodiment, when the interval time ends, the electronic device 101 may output an alarm 920.

FIG. 9B is a view illustrating an operation according to a wake-up mode in a second folding state of an electronic device according to an embodiment.

Referring to FIG. 9B, when the electronic device is rotated to convert to the second folding state while the alarm is ringing, the electronic device 101 may delay 940 the alarm for a set time (e.g., snooze operation). According to an embodiment, when the electronic device 101 in the second folding state is flipped in the opposite direction to change to the second folding state in another direction, the electronic device 101 may extend the delay time.

FIG. 9C is a view illustrating an operation according to a wake-up mode in a second folding state of an electronic device according to an embodiment.

Referring to FIG. 9C, when the alarm delay time passes, the electronic device 101 may output an alarm 921. According to an embodiment, the electronic device 101 may display current time information 950 instead of the alarm delay screen of FIG. 9B.

According to an embodiment, the alarm 921 may be canceled through a UI displayed on the cover display. According to an embodiment, the alarm 921 may also be canceled through a voice input 951. For example, the electronic device 101 may terminate the alarm 921 when a voice 951 saying "Turn off the alarm" is input.

FIG. 9D is a view illustrating an operation according to wake-up mode cancellation in a second folding state of an electronic device according to an embodiment.

Referring to FIG. 9D, when changed to the second folding state before the alarm rings in the sleep mode, the electronic device 101 may provide a default screen 960. For example, the default screen 960 may include weather information and schedule information.

According to an embodiment, the electronic device 101 may output weather information and schedule information through sound.

According to an embodiment, when the alarm is canceled in the alarm delay state or when the alarm is canceled after ringing, the electronic device 101 may display the default screen 960 including weather information and schedule information and/or output weather information and schedule information through sound.

FIG. 10A is a view illustrating a music playback operation in a first folding state of an electronic device according to an embodiment.

Referring to FIG. 10A, when the folding state of the electronic device 101 (e.g., the electronic device 101 of FIG. 1, the processor 120 of FIG. 1, the electronic device 200 of FIG. 2A, the electronic device 200 of FIG. 2B) is changed to the first folding state while a music playback application is running, the electronic device 101 may display a screen 1010 related to the music playback application on the cover display. For example, the screen 1010 related to the music playback application may include information related to the music being played (e.g., album cover, song information) and a UI for controlling music playback.

According to an embodiment, the electronic device 101 may display color light on the flexible display based on the music being played. For example, the electronic device 101 may display color light on the flexible display based on the frequency range of the music being played.

According to an embodiment, the electronic device 101 may divide the flexible display into a plurality of areas. For example, the first area, the second area, and the third area may be areas corresponding to each housing.

According to an embodiment, the electronic device 101 may display color light of a color and/or brightness based on the volume of a low frequency range (e.g., 63, 125, 250 (Hz)) in the first area. The electronic device 101 may display color light of a color and/or brightness based on the volume of a mid frequency range (e.g., 500, 1k, 2k (kHz)) in the second area. The electronic device 101 may display color light of a color and/or brightness based on the volume of a high frequency range (e.g., 4k, 8k, 16k (kHz)) in the third area.

For example, the electronic device 101 may display color light closer to red as the volume of the low frequency range decreases and closer to blue as the volume increases in the first area. The electronic device 101 may display color light closer to blue as the volume of the low frequency range decreases and closer to light blue as the volume increases in the second area. The electronic device 101 may display color light closer to light blue as the volume of the high frequency range decreases and closer to yellow as the volume increases in the third area.

According to an embodiment, the electronic device may display the at least one color light at at least one brightness determined for the plurality of areas based on the magnitude of the output sound.

According to an embodiment, the color corresponding to each frequency range may be changed by user settings. According to an embodiment, it may be set by user settings not to display color light when music playback is performed in the first folding state.

FIG. 10B is a view illustrating a music playback operation in a second folding state of an electronic device according to an embodiment.

Referring to FIG. 10B, when the electronic device 101 is in the second folding state, the electronic device 101 may display an AOD screen 1030 on the cover display. For example, the electronic device 101 may have been changed from the first folding state as illustrated in FIG. 10A to the second folding state.

According to an embodiment, the AOD screen 1030 may include song information and a controller UI (e.g., widget). According to an embodiment, in the second folding state, color light may be maintained or canceled. For example, when music is playing and color light is being displayed in the first folding state and then changed to the second folding state, the electronic device 101 may pause the music and cancel the color light.

According to an embodiment, when the electronic device 101 is changed from the second folding state to the first folding state, the electronic device 101 may display a screen related to the music playback application on the cover display, display color light, and play music.

FIG. 11A is a view illustrating a video playback operation in a first folding state of an electronic device according to an embodiment.

Referring to FIG. 11A, when the electronic device 101 (e.g., the electronic device 101 of FIG. 1, the processor 120 of FIG. 1, the electronic device 200 of FIG. 2A, the electronic device 200 of FIG. 2B) is changed to the first folding state during video (e.g., game or movie) playback, the electronic device 101 may display a screen 1110 corresponding to the video being played on the cover display.

According to an embodiment, the electronic device 101 may display color light on the flexible display based on the sound of the video. For example, the electronic device 101 may display color light on the flexible display based on the frequency range of the sound of the video.

According to an embodiment, the electronic device 101 may divide the flexible display into a plurality of areas. For example, the first area, the second area, and the third area may be areas corresponding to each housing.

According to an embodiment, the electronic device 101 may display color light of a color and/or brightness based on the volume of a low frequency range (e.g., 63, 125, 250 (Hz)) in the first area. The electronic device 101 may display color light of a color and/or brightness based on the volume of a mid frequency range (e.g., 500, 1k, 2k (kHz)) in the second area. The electronic device 101 may display color light of a color and/or brightness based on the volume of a high frequency range (e.g., 4k, 8k, 16k (kHz)) in the third area.

For example, the electronic device 101 may display color light closer to red as the volume of the low frequency range decreases and closer to blue as the volume increases in the first area. The electronic device 101 may display color light closer to blue as the volume of the low frequency range decreases and closer to light blue as the volume increases in the second area. The electronic device 101 may display color light closer to light blue as the volume of the high frequency range decreases and closer to yellow as the volume increases in the third area.

According to an embodiment, the electronic device may display the at least one color light at at least one brightness determined for the plurality of areas based on the magnitude of the output sound.

According to an embodiment, when the volume of stereo sound (or surround) changes in real-time (e.g., adjusting the volume as if the sound is moving from left to right), the electronic device 101 may adjust the brightness of the color light in each area in real-time based on the sound volume. As a result, the user may visually experience changes in sound.

According to an embodiment, the color corresponding to each frequency range may be changed by user settings. According to an embodiment, it may be set by user settings not to display color light when video sound is output in the first folding state.

FIG. 11B is a view illustrating a video playback operation in a second folding state of an electronic device according to an embodiment.

Referring to FIG. 11B, when the electronic device 101 is in the second folding state, the electronic device 101 may display an AOD screen 1130 on the cover display. For example, the electronic device 101 may have been changed from the first folding state as illustrated in FIG. 11A to the second folding state.

According to an embodiment, the AOD screen 1130 may include video information (e.g., game name, video name). According to an embodiment, in the second folding state, color light may be maintained or canceled. For example, when a video is displayed and color light is being displayed in the first folding state and then changed to the second folding state, the electronic device 101 may turn off the screen, display the AOD screen 1130, and cancel the color light.

According to an embodiment, when the electronic device 101 is changed from the second folding state to the first folding state, the electronic device 101 may display a video on the cover display and display color light.

FIG. 12A is a view illustrating a default screen display operation in a first folding state of an electronic device according to an embodiment.

Referring to FIG. 12A, when a screen corresponding to the first folding state is not defined for an application (e.g., home screen, lock screen, AOD), the electronic device 101 (e.g., the electronic device 101 of FIG. 1, the processor 120 of FIG. 1, the electronic device 200 of FIG. 2A, the electronic device 200 of FIG. 2B) may display a default screen 1210 on the cover display. For example, the default screen 1210 may include weather information, date information, and/or schedule information. According to an embodiment, the default screen 1210 may be set by a manufacturer or a user.

According to an embodiment, the electronic device 101 may display color light 1220 based on information included in the default screen 1210. For example, the electronic device 101 may display the color light 1220 based on weather information included in the default screen 1210.

For example, the electronic device 101 may display the at least one color light in a color based on at least one of a weather type or a temperature. For example, the electronic device 101 may display color light in a color closer to blue as the temperature is lower and closer to red as the temperature is higher. According to an embodiment, the electronic device 101 may display color light such that the color has lower brightness when the weather is cloudy and higher brightness when the weather is clear.

According to an embodiment, the electronic device 101 may be set not to display color light corresponding to the default screen 1210 based on user input.

FIG. 12B is a view illustrating a default screen display operation in a second folding state of an electronic device according to an embodiment.

Referring to FIG. 12B, when the electronic device 101 is in the second folding state, the electronic device 101 may display an AI assistant mode screen 1230 on the cover display. For example, the electronic device 101 may have been changed from the first folding state as illustrated in FIG. 12A to the second folding state.

According to an embodiment, the electronic device 101 may provide a briefing of the current date, time, weather, calendar, and schedule information based on activation of the AI assistant mode. According to an embodiment, the AI assistant mode screen 1230 may include a UI indicating that it is in a speech waiting mode.

As such, based on the characteristics of the multi-foldable structure including a plurality of hinges, the cover display may be stably used through the triangular prism-shaped mounting mode. Additionally, through the in-folding main display, a specialized experience may be provided with lighting effects tailored to the circumstance.

According to an embodiment, an electronic device may include a multi-foldable housing including a first housing, a second housing rotatably connected to one end of the first housing, and a third housing rotatably connected to another end of the first housing, a first hinge rotatably connecting the first housing and the second housing, a second hinge rotatably connecting the first housing and the third housing, a flexible display exposed through a first display area of the first housing, a second display area of the second housing, and a third display area of a third housing, a cover display disposed in a fourth area opposite the second display area of the second housing, a first sensor, a second sensor, a third sensor, memory, and a processor operatively connected to the flexible display, the cover display, the first sensor, the second sensor, the third sensor, and the memory.

According to an embodiment, the memory may store instructions that, when executed by the processor, cause the electronic device to identify a folding state of the electronic device based on a sensing value of the first sensor, a sensing value of the second sensor, and a sensing value of the third sensor.

According to an embodiment, the memory may store instructions that, when executed by the processor, cause the electronic device to, based on identifying that the folding state is a first folding state, display a screen related to an application being executed on the cover display.

According to an embodiment, the memory may store instructions that, when executed by the processor, cause the electronic device to display at least one color light related to the application on the flexible display.

According to an embodiment, the memory may store instructions that, when executed by the processor, cause the electronic device to, as at least part of identifying the folding state of the electronic device, identify the folding state based on a first angle between the first housing and the second housing sensed through the first sensor, a second angle between the first housing and the third housing sensed through the second sensor, and a direction of the electronic device sensed through the third sensor.

According to an embodiment, the first folding state may be a state in which the direction of the electronic device is such that a portion of a fifth area opposite the third display area of the third housing contacts a ground, and the first housing to the third housing are in-folded for the first angle and the second angle to be acute angles within a set range.

According to an embodiment, the memory may store instructions that, when executed by the processor, cause the electronic device to display color lights on a plurality of areas included in the flexible display, respectively.

According to an embodiment, the at least one processor may store instructions to output a sound related to the application.

According to an embodiment, the memory may store instructions that, when executed by the processor, cause the electronic device to display the at least one color light in at least one color determined for the plurality of areas based on a sound range of the output sound.

According to an embodiment, the memory may store instructions that, when executed by the processor, cause the electronic device to output a sound related to the application.

According to an embodiment, the memory may store instructions that, when executed by the processor, cause the electronic device to display the at least one color light at at least one brightness determined for the plurality of areas based on a magnitude of the output sound.

According to an embodiment, the memory may store instructions that, when executed by the processor, cause the electronic device to, based on an event occurring while the folding state is not the first folding state, display a message inducing a change of the folding state to the first folding state.

According to an embodiment, the memory may store instructions that, when executed by the processor, cause the electronic device to, based on identifying that the folding state is the first folding state, display a screen related to the application corresponding to the event on the cover display.

According to an embodiment, the memory may store instructions that, when executed by the processor, cause the electronic device to, based on activating a mode for inducing sleep, gradually change the color of the at least one color light to a color with a low color temperature.

According to an embodiment, the memory may store instructions that, when executed by the processor, cause the electronic device to gradually reduce a brightness of the at least one color light.

According to an embodiment, the memory may store instructions that, when executed by the processor, cause the electronic device to, based on displaying a screen related to a weather application on the cover screen, display the at least one color light in a color based on at least one of a weather type or a temperature.

According to an embodiment, the memory may store instructions that, when executed by the processor, cause the electronic device to, based on the folding state being changed to the first folding state in a state of displaying an execution screen of the application including a video on at least a partial area of the flexible display, display a screen corresponding to the video on the cover display.

According to an embodiment, the memory may store instructions that, when executed by the processor, cause the electronic device to display the at least one color light on the flexible display in a color determined based on a sound of the video.

According to an embodiment, the memory may store instructions that, when executed by the processor, cause the electronic device to, based on the folding state being changed from the first folding state to a second folding state, display a second screen related to the application corresponding to the second folding state on the cover display.

According to an embodiment, the second folding state may be a state in which the first housing to the third housing are in-folded for the first angle and the second angle to be acute angles within the set range, and a side of the first housing, a side of the second housing, and a side of the third housing contact the ground.

According to an embodiment, the memory may store instructions that, when executed by the processor, cause the electronic device to, based on identifying that the folding state is the second folding state, stop displaying the at least one color light on the flexible display.

According to an embodiment, the memory may store instructions that, when executed by the processor, cause the electronic device to, based on a screen related to the application being not set, display a default screen set by a manufacturer or a user input on the cover display.

According to an embodiment, the memory may store instructions that, when executed by the processor, cause the electronic device to display the at least one color light related to a function included in the default screen on the flexible display.

According to an embodiment, a control method of an electronic device may include an operation of identifying a folding state of the electronic device based on a sensing value of a first sensor of the electronic device, a sensing value of a second sensor of the electronic device, and a sensing value of a third sensor of the electronic device.

According to an embodiment, the control method of the electronic device may include an operation of, based on identifying that the folding state is a first folding state, displaying a screen related to an application being executed on a cover display.

According to an embodiment, the control method of the electronic device may include an operation of displaying at least one color light related to the application on a flexible display including a first display area of the first housing, a second display area of the second housing, and a third display area of the third housing.

According to an embodiment, the operation of identifying the folding state may identify the folding state based on a first angle between the first housing and the second housing sensed through the first sensor, a second angle between the first housing and the third housing sensed through the second sensor, and a direction of the electronic device sensed through the third sensor.

According to an embodiment, the first folding state may be a state in which the direction of the electronic device is such that a portion of a fifth area opposite the third display area of the third housing contacts a ground, and the first housing to the third housing are in-folded for the first angle and the second angle to be acute angles within a set range.

According to an embodiment, the cover display may be disposed in a fourth area opposite the second display area of the second housing.

According to an embodiment, the operation of displaying the at least one color light may display color lights on a plurality of areas included in the flexible display, respectively.

According to an embodiment, the control method of the electronic device may further include an operation of outputting a sound related to the application.

According to an embodiment, the operation of displaying the at least one color light may display the at least one color light in at least one color determined for the plurality of areas based on a sound range of the output sound.

According to an embodiment, the control method of the electronic device may further include an operation of outputting a sound related to the application.

According to an embodiment, the operation of displaying the at least one color light may display the at least one color light at at least one brightness determined for the plurality of areas based on a magnitude of the output sound.

According to an embodiment, the control method of the electronic device may further include an operation of, based on activating a mode for inducing sleep, gradually changing the color of the at least one color light to a color with a low color temperature.

According to an embodiment, the control method of the electronic device may further include an operation of gradually reducing a brightness of the at least one color light.

According to an embodiment, the operation of displaying the at least one color light may, based on displaying a screen related to a weather application on the cover screen, display the at least one color light in a color based on at least one of a weather type or a temperature.

According to an embodiment, the operation of displaying a screen related to the application being executed on the cover display may, based on the folding state being changed to the first folding state in a state of displaying an execution screen of the application including a video on at least a partial area of the flexible display, display a screen corresponding to the video on the cover display.

According to an embodiment, the operation of displaying the at least one color light may display the at least one color light on the flexible display in a color determined based on a sound of the video.

According to an embodiment, the operation of displaying a screen related to the application being executed on the cover display may, based on a screen related to the application being not set, display a default screen set by a manufacturer or a user input on the cover display.

According to an embodiment, the operation of displaying the at least one color light may display the at least one color light related to a function included in the default screen on the flexible display.

According to an embodiment, in a non-transitory computer-readable recording medium storing one or more programs, the one or more programs may include instructions for an electronic device to identify a folding state of the electronic device based on a sensing value of a first sensor of the electronic device, a sensing value of a second sensor of the electronic device, and a sensing value of a third sensor of the electronic device.

According to an embodiment, the one or more programs may enable the electronic device to, based on identifying that the folding state is a first folding state, display a screen related to an application being executed on a cover display.

According to an embodiment, the one or more programs may include instructions for the electronic device to display at least one color light related to the application on a flexible display including a first display area of the first housing, a second display area of the second housing, and a third display area of the third housing.

According to an embodiment, the one or more programs may include instructions for the electronic device to, as part of identifying the folding state, identify the folding state based on a first angle between the first housing and the second housing sensed through the first sensor, a second angle between the first housing and the third housing sensed through the second sensor, and a direction of the electronic device sensed through the third sensor.

According to an embodiment, the first folding state may be a state in which the direction of the electronic device is such that a portion of a fifth area opposite the third display area of the third housing contacts a ground, and the first housing to the third housing are in-folded for the first angle and the second angle to be acute angles within a set range.

According to an embodiment, the cover display may be disposed in a fourth area opposite the second display area of the second housing.

According to an embodiment, the one or more programs may enable the electronic device to display color lights on a plurality of areas included in the flexible display, respectively.

According to an embodiment, the one or more programs may include instructions for the electronic device to output a sound related to the application.

According to an embodiment, the at least one processor may include instructions to display the at least one color light in at least one color determined for the plurality of areas based on a sound range of the output sound.

According to an embodiment, the one or more programs may include instructions for the electronic device to output a sound related to the application.

According to an embodiment, the at least one processor may include instructions to display the at least one color light at at least one brightness determined for the plurality of areas based on a magnitude of the output sound.

According to an embodiment, the one or more programs may include instructions for the electronic device to, based on an event occurring while the folding state is not the first folding state, display a message inducing a change of the folding state to the first folding state.

According to an embodiment, the one or more programs may include instructions for the electronic device to, based on identifying that the folding state is the first folding state, display a screen related to the application corresponding to the event on the cover display.

According to an embodiment, the one or more programs may include instructions for the electronic device to, based on activating a mode for inducing sleep, gradually change the color of the at least one color light to a color with a low color temperature.

According to an embodiment, the one or more programs may include instructions for the electronic device to gradually reduce a brightness of the at least one color light.

According to an embodiment, the one or more programs may include instructions for the electronic device to, based on displaying a screen related to a weather application on the cover screen, display the at least one color light in a color based on at least one of a weather type or a temperature.

According to an embodiment, the one or more programs may include instructions for the electronic device to, based on the folding state being changed to the first folding state in a state of displaying an execution screen of the application including a video on at least a partial area of the flexible display, display a screen corresponding to the video on the cover display.

According to an embodiment, the one or more programs may include instructions for the electronic device to display the at least one color light on the flexible display in a color determined based on a sound of the video.

According to an embodiment, the one or more programs may include instructions for the electronic device to, based on the folding state being changed from the first folding state to a second folding state, display a second screen related to the application corresponding to the second folding state on the cover display.

According to an embodiment, the second folding state may be a state in which the first housing to the third housing are in-folded for the first angle and the second angle to be acute angles within the set range, and a side of the first housing, a side of the second housing, and a side of the third housing contact the ground.

According to an embodiment, the one or more programs may include instructions for the electronic device to, based on identifying that the folding state is the second folding state, stop displaying the at least one color light on the flexible display.

According to an embodiment, the one or more programs may include instructions for the electronic device to, based on a screen related to the application being not set, display a default screen set by a manufacturer or a user input on the cover display.

According to an embodiment, the one or more programs may include instructions for the electronic device to display the at least one color light related to a function included in the default screen on the flexible display.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a multi-foldable housing including a first housing, a second housing rotatably connected to one end of the first housing, and a third housing rotatably connected to another end of the first housing;
a first hinge portion rotatably connecting the first housing and the second housing;
a second hinge portion rotatably connecting the first housing and the third housing;
a flexible display including a first display area disposed in the first housing, a second display area disposed in the second housing, and a third display area disposed in the third housing;
a cover display disposed in a fourth area of the second housing opposite the second display area;
a first sensor;
a second sensor;
a third sensor;
memory; and
a processor operatively connected to the flexible display, the cover display, the first sensor, the second sensor, the third sensor, and the memory;
wherein the memory stores instructions that, when executed by the processor, cause the electronic device to:
identify a folding state of the electronic device based on a sensing value of the first sensor, a sensing value of the second sensor, and a sensing value of the third sensor, and
based on identifying that the folding state is a first folding state, display, on the cover display, a screen related to an application being executed.

2. The electronic device of claim 1,
wherein the memory stores instructions that when executed by the processor, cause the electronic device to:
display at least one color light related to the application on the flexible display, and
as at least part of identifying the folding state of the electronic device, identify the folding state based on a first angle between the first housing and the second housing sensed through the first sensor, a second angle between the first housing and the third housing sensed through the second sensor, and a direction of the electronic device sensed through the third sensor, and
wherein the first folding state is a state in which the direction of the electronic device is such that a part of a fifth area opposite the third display area of the third housing is in contact with a ground, and the first housing to the third housing are in-folded for the first angle and the second angle to be acute angles within a set range.

3. The electronic device of claim 2,
wherein the memory stores instructions that when executed by the processor, cause the electronic device to display color lights on a plurality of areas included in the flexible display, respectively.

4. The electronic device of claim 3,
wherein the memory stores instructions that when executed by the processor, cause the electronic device to:
output a sound related to the application, and
based on a sound range of the output sound, display the at least one color light in at least one color determined for the plurality of areas, respectively.

5. The electronic device of claim 3,
wherein the memory stores instructions that when executed by the processor, cause the electronic device to:
output a sound related to the application, and
based on a magnitude of the output sound, display the at least one color light at at least one brightness determined for the plurality of areas, respectively.

6. The electronic device of any one of claims 1 to 5,
wherein the memory stores instructions that when executed by the processor, cause the electronic device to:
based on an event occurring while the folding state is not the first folding state, display a message for inducing a change of the folding state to the first folding state, and
based on identifying that the folding state is the first folding state, display a screen related to the application corresponding to the event on the cover display.

7. The electronic device of any one of claims 2 to 6,
wherein the memory stores instructions that when executed by the processor, cause the electronic device to:
based on activating a mode for inducing sleep, gradually change the color of the at least one color light to a color with a low color temperature, and
gradually reduce a brightness of the at least one color light.

8. The electronic device of any one of claims 2 to 6,
wherein the memory stores instructions that when executed by the processor, cause the electronic device to, based on displaying a screen related to a weather application on the cover screen, display the at least one color light in a color based on at least one of a weather type or a temperature.

9. The electronic device of any one of claims 2 to 6,
wherein the memory stores instructions that when executed by the processor, cause the electronic device to:
based on the folding state being changed to the first folding state in a state of displaying an execution screen of the application including a video on at least a part of the flexible display, display a screen corresponding to the video on the cover display, and
display the at least one color light on the flexible display in a color determined based on a sound of the video.

10. The electronic device of any one of claims 1 to 9,
wherein the memory stores instructions that when executed by the processor, cause the electronic device to, based on the folding state being changed from the first folding state to a second folding state, display a second screen related to the application corresponding to the second folding state on the cover display,
wherein the second folding state is a state in which the first housing to the third housing are in-folded for the first angle and the second angle to be acute angles within the set range, and a side of the first housing, a side of the second housing and a side of the third housing are in contact with the ground.

11. The electronic device of claim 10,
wherein the memory stores instructions that when executed by the processor, cause the electronic device to, based on identifying that the folding state is the second folding state, stop displaying the at least one color light on the flexible display.

12. The electronic device of any one of claims 2 to 6, 9, and 10,
wherein the memory stores instructions that when executed by the processor, cause the electronic device to:
based on a screen related to the application being not set, display a default screen set by a manufacturer or a user input on the cover display, and
display the at least one color light related to a function included in the default screen on the flexible display.

13. A control method of an electronic device, comprising:
identifying a folding state of the electronic device based on a sensing value of a first sensor of the electronic device, a sensing value of a second sensor of the electronic device, and a sensing value of a third sensor of the electronic device; and
based on identifying that the folding state is a first folding state, displaying a screen related to an application being executed on a cover display.

14. The control method of claim 13, further comprising
displaying at least one color light related to the application on a flexible display including a first display area of the first housing, a second display area of the second housing, and a third display area of the third housing,
wherein identifying the folding state includes identifying the folding state based on a first angle between the first housing and the second housing sensed through the first sensor, a second angle between the first housing and the third housing sensed through the second sensor, and a direction of the electronic device sensed through the third sensor,
wherein the first folding state is a state in which the direction of the electronic device is such that a portion of a fifth area opposite the third display area of the third housing contacts a ground, and the first housing to the third housing are in-folded for the first angle and the second angle to be acute angles within a set range, and
wherein the cover display is disposed in a fourth area opposite the second display area of the second housing.

15. The control method of claim 14,
wherein displaying the at least one color light includes displaying color lights on a plurality of areas included in the flexible display, respectively.
